**Europäisches Patentamt**

**European Patent Office**

**Office européen des brevets**

(19)

(11) Veröffentlichungsnummer: **0 088 235**
**B1**

(12) **EUROPÄISCHE PATENTSCHRIFT**

(45) Veröffentlichungstag der Patentschrift:
20.05.87

(51) Int. Cl.⁴: **G 01 F 1/66**

(21) Anmeldenummer: **83101010.3**

(22) Anmeldetag: **03.02.83**

(54) **Messwertgeber zur Bestimmung der Durchflussmenge einer strömenden Flüssigkeit.**

(30) Priorität: **01.03.82 CH 1227/82**

(43) Veröffentlichungstag der Anmeldung:
**14.09.83 Patentblatt 83/37**

(45) Bekanntmachung des Hinweises auf die Patenterteilung:
**20.05.87 Patentblatt 87/21**

(84) Benannte Vertragsstaaten:
**AT BE FR GB IT NL SE**

(56) Entgegenhaltungen:
**DE-A-2 527 306**
**DE-B-2 648 718**
**DE-B-2 924 561**
**US-A-3 817 098**
**US-A-4 140 012**

(73) Patentinhaber: **LGZ LANDIS & GYR ZUG AG, CH-6301 Zug (CH)**

(72) Erfinder: **Meisser, Claudio, Mythenstrasse 19, CH-6410 Goldau (CH)**
Erfinder: **Lechner, Hubert, Industriestrasse 6, CH-6300 Zug (CH)**
Erfinder: **Steinle, Benedikt, Dr., Schönbühl 50, CH-6300 Zug (CH)**

(74) Vertreter: **Müller, Hans- Jürgen, Dipl.- Ing., Müller, Schupfner & Gauger Lucile- Grahn- Strasse 38 Postfach 80 13 69, D-8000 München 80 (DE)**

LIBER, STOCKHOLM 1987

## Beschreibung

Die Erfindung bezieht sich auf einen Meßwertgeber zur Bestimmung der Durchflußmenge einer durch ein Rohrsystem strömenden Flüssigkeit nach dem Oberbegriff des Patentanspruchs 1.

Ein derartiger Meßwertgeber ist bereits aus der DE-B-2 924 561 bekannt. Dabei verbindet ein Rohr zwei Verteilkammern und wird der Innenraum des Meßrohres als Meßstrecke verwendet. Damit die beiden Verteilkammern außerhalb der Meßstrecke nicht in Verbindung miteinander stehen, wird dafür gesorgt, daß das Meßrohr in die die Verteilkammern trennende Trennwand dicht beispielsweise durch Eingießen, Einpressen oder Löten eingesetzt ist. Obwohl die vorbekannte Anordnung die Durchflußmenge gut zu bestimmen vermag, treten gelegentlich noch Probleme hinsichtlich der Meßgenauigkeit auf.

Darüber hinaus ist es nach der DE-B-2 648 718 bekannt, die lichte Weite des Meßrohrs kleiner als etwa das Fünfzehnfache der Wellenlänge des betreffenden Ultraschallsignals auszuwählen und dafür zu sorgen, daß die Innenwand des Meßrohres eine geringere akustische Impedanz als Metall aufweist und insbesondere mit einer etwa 1 mm dicken Auskleidung aus Polyamid versehen ist. Auch bei dieser Ausbildung des Meßwertgebers treten noch Meßungenauigkeiten auf.

Der Erfindung liegt die Aufgabe zugrunde, den Meßwertgeber der eingangs genannten Gattung dahingehend zu verbessern, daß durch einfache Maßnahmen die Meßgenauigkeit unter Reduzierung störender Echos erhöht wird.

Die Erfindung besteht darin, daß das Meßrohr mit dem bzw. den die beiden Verteilkammern bildenden Gehäuse bzw. Gehäusen eine nichtmetallische Verbindung aufweist, deren Material eine der Schallimpedanz der Flüssigkeit weitgehend angenäherte Schallimpedanz aufweist.

Bei der Erfindung ist das metallische Meßrohr ohne Verwendung von Metall mit der die Verteilkammern trennenden Trennwand verbunden; zusätzlich ist für eine "Anpassung" der Wellenwiderstände des nichtmetallischen Verbindungsmaterials mit der das Meßrohr durchströmenden Flüssigkeit gesorgt.

Weitere Ausbildungen der Erfindung sind in abhängigen Ansprüchen 2 bis 5 beansprucht.

Nachfolgend werden Ausführungsbeispiele der Erfindung anhand der Zeichnung näher erläutert. Dabei zeigen:

Fig. 1 einen Schnitt durch einen Meßwertgeber,

Fig. 2 ein Detail einer etwas anders gestalteten Ausführung und

Fig. 3 einen Schnitt durch einen gegenüber der Fig. 1 anders aufgebauten Meßwertgeber.

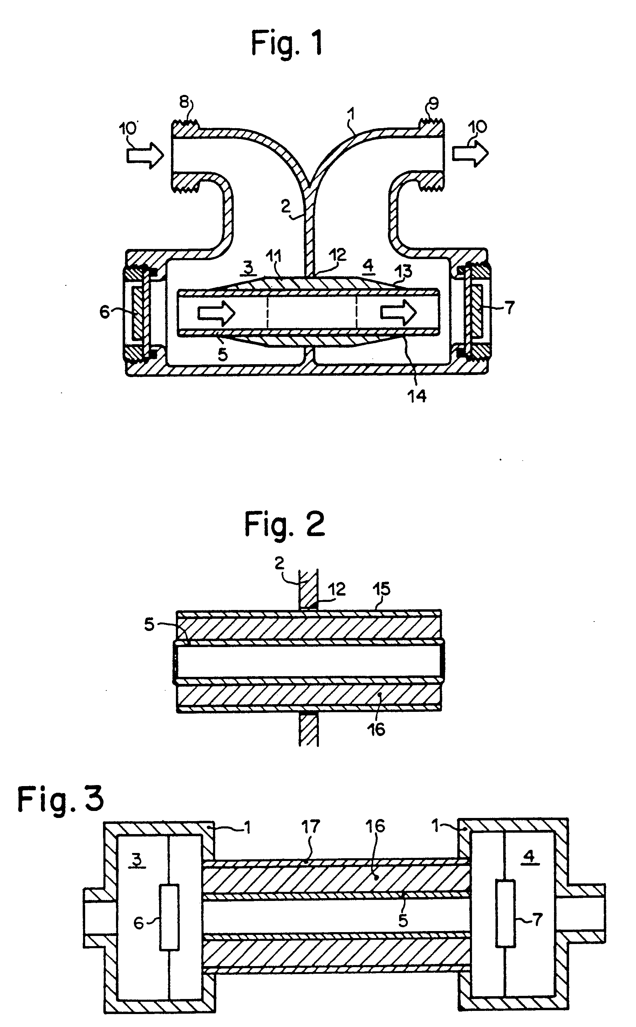

In der Fig. 1 bedeutet 1 ein Gehäuse, das zwei durch eine Trennwand 2 unterteilte Verteilkammern 3 und 4 umschließt.

Ein Meßrohr 5 verbindet hydraulisch die beiden Verteilkammern 3 und 4 und durchdringt die Trennwand 2. Gegenüber den beidseitigen Stirnseiten des Meßrohres 5 befindet sich je ein Meßwandler 6 und 7 für Ultraschall-Impulse. Die Mittelachse einer vom Meßrohr 5 gebildeten Meßstrecke ist zugleich ein Lot auf das Zentrum der aktiven Übertragungsfläche der Meßwandler 6, 7. Das Gehäuse 1 weist einen Zuflußstutzen 8 und einen Abflußstutzen 9 für die zu messende Flüssigkeit auf, die entsprechend Pfeilen 10 durch das Gehäuse 1 des Meßwertgebers fließt. Die Laufzeitdifferenz der von den Meßwandlern 6 und 7 gesendeten und empfangenen Ultraschall-Impulse dient als Grundlage für die Erfassung der durch das Meßrohr 5 fließenden Flüssigkeitsmenge.

Ein Teil der von den Meßwandlern 6, 7 abgestrahlten Schallimpulse dringt auch in die Rohrwand des aus Rotguß, Messing oder rostsicherem Stahl bestehenden Meßrohres 5 ein. Eine metallische Einspannstelle des Meßrohres 5 oder eine Querschnittsveränderung des Rohrmaterials erzeugt eine Veränderung der akustischen Wand-Impedanz, die zu störenden Echos führt. Zu ihrer Verhinderung ist der Querschnitt des metallischen Materials, das die Meßstrecke unmittelbar umgibt, auf der ganzen Meßstrecke gleich. Zwischen dem Meßrohr 5 und der Trennwand 2 besteht zu diesem Zweck eine nichtmetallische Verbindung in Form einer Führungsbuchse 11, die das Meßrohr 5 wenigstens auf einem Teil seiner Länge umschließt und die mit ihrer Außenkontur in der Trennwand 2 gelagert ist. Die Trennwand 2 weist zu diesem Zweck eine Bohrung 12 auf, in welche die Führungsbuchse 11 beispielsweise eingeschraubt wird. Mit dem Meßrohr 5 ist die Führungsbuchse mechanisch fest verbunden.

Die stirnseitigen Begrenzungen der Führungsbuchse 11 können als plane Flächen ausgebildet sein. Um auch an diesen Stirnkanten eine allfällige Echowirkung zu vermeiden, kann es zweckmäßig sein, wenn sich die Wandstärke der Führungsbuchse 11 anschließend an einen mittleren Teil konstanter Wandstärke am Außenumfang abnehmend, einen Konus 13 bildend bis zu einem scharfkantigen Ende 14 verjüngt, wie dies in der Fig. 1 dargestellt ist.

Für die Führungsbuchse 11 ist ein Material am geeignetsten, das neben der nötigen Stabilität für die Halterung des Meßrohres unter dem Einfluß von Ultraschall-Impulsen etwa die gleiche Schallimpedanz aufweist wie die zu messende Flüssigkeit. Für Wasser eignet sich Teflon[c], Hartgummi, oder ein heißwasserbeständiger Kunststoff.

In der Ausführung nach der Fig. 2 und 3 dient als Führungsbuchse ein Rohr 15 bzw. 17 größeren Innendurchmessers als der Außendurchmesser des Meßrohres 5. Ein Zylinderraum 16 zwischen den beiden konzentrisch zueinander gelagerten Rohren 15 bzw. 17 und 5 annähernd gleicher Länge ist mit einem Material ausgefüllt, das die beiden Rohre voneinander möglichst stark akustisch entkoppelt, wobei dieses Material gleichzeitig als Halterung für das Meßrohr 5 dient. Als Material eignet sich beispielsweise vulkanisierter Gummi. Im Beispiel der Fig. 2 ist das Rohr 15 in der Bohrung 12 der Trennwand 2 unverrückbar befestigt.

In der Ausführung nach der Fig. 3 sind die beiden Verteilkammern 3 und 4 nicht wie im Beispiel der Fig. 1 durch ein gemeinsames Gehäuse gebildet, sondern sie bestehen aus zwei einzelnen Gehäusen. Die Lage der beiden Verteilkammern 3 und 4 zueinander ist durch das Verbindungsrohr 17 gegeben, dessen Enden an den die Verteilkammern 3 und 4 bildenden Gehäusen befestigt sind.

Durch die beschriebene akustische Entkopplung des Meßrohres 5 von seiner Halterung wird nicht nur eine bessere Meßgenauigkeit erreicht, sondern es wird auch die Exemplar-Streuung bei der Produktion solcher Geräte und damit der Aufwand für ihre Eichung reduziert.

**Patentansprüche**

1. Meßwertgeber zur Bestimmung der Durchflußmenge einer durch ein Rohrsystem strömenden Flüssigkeit durch Messung der Laufzeit von Ultraschall innerhalb der ein Meßrohr (5) durchströmenden Flüssigkeit, mit zwei mit der Flüssigkeit in unmittelbarer Berührung stehenden Meßwandlern (6, 7), von denen je ein Meßwandler (6; 7) in je einer von zwei einzig durch das Meßrohr (5) miteinander verbundenen Verteilkammern (3, 4) in einem Abstand von den freien Enden des Meßrohres (5) angeordnet ist, wobei die Mittelachse der vom Meßrohr (5) gebildeten Meßstrecke zugleich ein Lot durch das Zentrum der aktiven Übertragungsfläche der Meßwandler (6, 7) ist und wobei der Querschnitt des metallischen Materials des Meßrohres (5), das die Meßstrecke unmittelbar umgibt, auf der ganzen Länge der Meßstrecke gleich ist, dadurch gekennzeichnet, daß das Meßrohr (5) mit dem bzw. den die beiden Verteilkammern (3, 4) bildenden Gehäuse bzw. Gehäusen (1) eine nichtmetallische Verbindung (11, 16) aufweist, deren Material eine der Schallimpedanz der Flüssigkeit weitgehend angenäherte Schallimpedanz aufweist.

2. Meßswertgeber nach Anspruch 1, bei dem die beiden Verteilkammern (3, 4) durch eine gemeinsame Trennwand (2) unterteilt und zu einem einzigen Gehäuse (1) zusammengefaßt sind, dadurch gekennzeichnet, daß zur Halterung des Meßrohres (5) eine das Meßrohr (5) wenigstens auf einem Teil seiner Länge umschließende und in der gemeinsamen Trennwand (2) gelagerte nichtmetallische Führungsbuchse (11) dient, deren Wandstärke anschließend an einen mittleren Teil konstanter Wandstärke beidseitig gegen das Ende hin verjüngt ist.

3. Meßwertgeber nach Anspruch 2, dadurch gekennzeichnet, daß als Führungsbuchse ein Rohr (15) größeren Innendurchmessers als der Außendurchmesser des Meßrohres (5) dient und der Zylinderraum (16) zwischen den konzentrischen Rohren (15, 5) mit einem Material ausgefüllt ist, das eine hohe akustische Entkopplung zwischen den beiden Rohren (15, 5) bewirkt.

4. Meßwertgeber noch Anspruch 1, bei dem die beiden Verteilkammern (3, 4) je am Ende eines Verbindungsrohres (17) angeordnet sind und ihre gegenseitige Lage durch das Verbindungsrohr (17) fest bestimmt ist, dadurch gekennzeichnet, daß das Verbindungsrohr (17) einen größeren Innendurchmesser aufweist als der Aussendurchmesser des konzentrisch zum Verbindungsrohr (17) angeordneten Meßrohres (5), und daß der Zylinderraum (16) zwischen den konzentrischen Rohren (5, 17) mit einem nichtmetallischen Material ausgefüllt ist, das eine hohe akustische Entkopplung zwischen den beiden Rohren (5, 17) bewirkt.

5. Meßwertgeber nach Anspruch 3 oder 4, dadurch gekennzeichnet, daß als Material im Zylinderraum (16) vulkanisierter Gummi dient.

**Claims**

1. A measuring device for determining the flow rate of a fluid flowing through a pipe system by measuring the transit time of ultrasound within the fluid flowing through a measuring pipe (5), comprising two measuring transducers (6, 7) which are in direct contact with the fluid and each of which is arranged in a respective one of two distribution chambers (3, 4) at a spacing from the free ends of the measuring pipe, the distribution chambers being interconnected solely by the measuring pipe (5), wherein the centre line of the measuring section formed by the measuring pipe (5) is at the same time a perpendicular line through the centre of the active transmission surface of the measuring transducers (6, 7) and wherein the cross-section of the metallic material of the measuring pipe (5), which directly surrounds the measuring section, is the same over the entire length of the measuring section, characterised in that the measuring pipe (5) has a non-metal connection (11, 16) to the housing or housings (1) forming the two distribution chambers (3, 4), the material of the connection (11, 16) having an acoustic impedance which is substantially approximated to the acoustic impedance of the fluid.

2. A measuring device according to claim 1 wherein the two distribution chambers (3, 4) are subdivided by a common partitioning wall (2) and are combined together to foim a single housing (1) characterised in that the measuring pipe (5) is held in position by a non-metallic guide sleeve (11) which surrounds the measuring pipe (5) at least over a part of the length of the measuring pipe and which is mounted in the common partitioning wall (2), the wall thickness of the guide sleeve, adjoining a central portion of constant wall thickness, decreasing at both sides towards the ends.

3. A measuring device according to claim 2 characterised in that the guide sleeve is a tube (15) of larger inside diameter than the outside diameter of the measuring pipe (5) and the cylindrical space (16) between the concentric tube (15) and the measuring pipe (5) is filled with a material which provides for a high degree of acoustic decoupling between the tube (15) and the measuring pipe (5).

4. A measuring device according to claim 1 wherein the two distribution chambers (3, 4) are arranged at respective ends of a connecting tube (17) and their relative position is fixedly defined by the connecting tube (17) characterised in that the connecting tube (17) is of larger inside diameter than the outside diameter of the measuring pipe (5) which is arranged concentrically with respect to the connecting tube (17), and that the cylindrical space (16) between the concentric connecting tube (17) and measuring pipe (5) is filled with a non-metallic material which provides for a high level of acoustic decoupling between the measuring pipe (5) and the connecting tube (17).

5. A measuring device according to claim 3 or claim 4 characterised in that vulcanised rubber is used as the material in the cylindrical space (16).

**Revendications**

1. Transmetteur de débit d'un liquide circulant dans un réseau de conduites par mesure du temps de propagation d'ultrasons à l'intérieur du liquide circulant dans un tube de mesure (5), avec deux transducteurs (6, 7) en contact direct avec le liquide et disposés chacun (6; 7) à distance des extrémités libres du tube de mesure (5), dans une des deux chambres de distribution (3, 4) reliées uniquement par le tube de mesure (5), l'axe de la section de mesure formée par ledit tube (5) étant perpendiculaire au centre de la surface de transmission active des transducteurs (6, 7) et la section du matériau métallique du tube de mesure (5) entourant la section de mesure étant constante sur toute la longueur de cette dernière, ledit transmetteur étant caractérisé en ce que le tube de mesure (5) présente avec le ou les corps formant les deux chambres de distribution (3, 4) une liaison non-métallique (11, 16), dont le matériau présente une impédance acoustique très voisine de celle du liquide.

2. Transmetteur selon revendication 1, dans lequel les deux chambres de distribution (3, 4) sont divisées par une cloison (2) commune et réunies en un corps (1) commum, ledit transmetteur étant caractérisé en ce que la fixation du tube de mesure (5) est assurée par une douille de guidage (11) qui entoure le tube de mesure (5) sur une partie au moins de sa longueur, avec une fixation non-métallique dans la cloison (2) commune, et dont l'épaisseur de paroi diminue de chaque côté vers l'extrémité, depuis une partie centrale à épaisseur de paroi constante.

3. Transmetteur selon revendication 2, caractérisé en ce que la douille de guidage est constituée par un tube (15) de diamètre intérieur supérieur au diamètre extérieur du tube de mesure (5); et la chambre cylindrique (16) comprise entre les tubes (15, 5) concentriques est remplie par un matériau assurant un découplage acoustique élevé entre les deux tubes (15, 5).

4. Transmetteur selon revendication 1, dans lequel les deux chambres de distribution (3, 4) sont disposées chacune à l'extrémité d'un tube de liaison (17) qui fixe leur position relative, ledit transmetteur étant caractérisé en ce que le tube de liaison (17) présente un diamètre intérieur supérieur au diamètre extérieur du tube de mesure (5) qui lui est concentrique; et la chambre cylindrique (16) comprise entre les tubes concentriques (5, 17) est remplie par un matériau non-métallique assurant un découplage acoustique élevé entre les deux tubes (5, 17).

5. Transmetteur selon une des revendications 3 ou 4, caractérisé em ce qu'un caoutchouc vulcanisé est utilisé comme matériau dans la chambre cylindrique (16).

0 088 235

# Fig. 1

# Fig. 2

# Fig. 3

1